# FASCICULE DE BREVET EUROPEEN

(11) **EP 0 670 074 B1**
(45) Date de publication et mention de la délivrance du brevet: **10.07.1996**
(21) Numéro de dépôt: 93924677.3
(22) Date de dépôt: 04.11.1993
(51) Int. Cl.: G10K 11/16, B32B 25/04, B60R 13/08

(54) **GARNITURE COMPOSITE D'AMORTISSEMENT SONORE**
Schalldämpfende,mehrschichtige Auskleidung
COMPOSITE SOUND DAMPING MEMBER

(30) Priorité: 17.11.1992 FR 9214016
(43) Date de publication de la demande: 06.09.1995
(73) Titulaire: SOCIETE OLIN, F-69960 Corbas (FR)
(72) Inventeur: AUBE, Gérard, F-69230 Saint-Genis-Laval (FR)
(74) Mandataire: Guerre, Dominique
(86) Numéro de dépôt international: FR9301091
(87) Numéro de publication internationale: WO9411860

(56) Documents cités:
- EP-A- 0 077 987
- EP-A- 0 145 122
- WO-A-80/00029
- FR-A- 2 560 953
- FR-A- 2 631 667
- US-A- 3 092 250
- US-A- 3 386 527
- US-A- 4 456 705
- US-A- 4 734 323

## Description

### Garniture composite d'amortissement sonore

L'invention concerne une garniture composite d'amortissement sonore, destinée à être fixée sur une structure à traiter, émettant ou transmettant des sons ou bruits, et plus généralement des vibrations.

Par "structure à traiter", on entend toute structure susceptible de vibrer, et notamment d'émettre ou transmettre des sons, pour différentes causes, telles que :
- support d'un moteur, et la structure est par exemple une carrosserie d'automobile ou la carcasse d'un appareil domestique ou machine industrielle
- édifice renfermant différentes sources sonores, et la structure est par exemple une construction à usage d'habitation, professionnel ou industriel.

Conformément au document US-A-4456705, on a décrit une garniture composite d'amortissement sonore, destinée à être fixée sur une structure à traiter émettant ou transmettant des sons, par exemple une carrosserie d'automobile, comprenant une plaque en matériau rigide, dont la face destinée à venir contre la structure à traiter est recouverte et liée à une couche d'un matériau plastique, ayant la consistance d'un mastic, et formulé pour conserver l'essentiel de son intégrité physico-chimique dans un intervalle de températures de environ - 40°C à environ + 60°C.

L'invention telle que définie dans les revendications a pour objet une garniture telle que précédemment définie, susceptible d'amortir les vibrations qu'elle reçoit de la structure sur laquelle elle est fixée, par sollicitation périodique en cisaillement de la plaque par rapport à la couche plastique.

L'invention a pour objet une garniture telle que précédemment définie, mais pouvant être mise en oeuvre, notamment conformée et découpée, à la manière d'un mastic en couche mince.

La garniture selon la présente invention, combine les deux caractéristiques suivantes, à savoir :
- d'une part la plaque rigide consiste en au moins une feuille métallique souple dont l'épaisseur est au plus égale à 5/10 mm, et est inférieure à l'épaisseur de la couche plastique
- et d'autre part le matériau élastique de la garniture est formulé, selon les pratiques usuelles de l'homme de métier, pour obtenir et combiner les propriétés suivantes, dans l'intervalle précité de températures, à savoir de environ -40°C à environ +60°C :
- conserver pour l'essentiel sa visco-élasticité,
- présenter, dans son état lié à la feuille métallique, un pouvoir d'amortissement sonore ou acoustique, en db/s, au m² et pour 1kg de garniture, au moins égal à 10, et de préférence au moins égal à 60,
- et présenter, dans son état lié à la feuille métallique, un pouvoir adhésif, exprimé par la force de traction nécessaire au pelage de la garniture, par rapport à son support, au moins égal à 40 N/dm².

Par "conserver son intégrité physico-chimique", on entend le fait que, d'une part les matériaux constitutifs ne se dénaturent pas chimiquement, et d'autre part la structure ou agencement physico-chimique du matériau est pour l'essentiel maintenu.

Par des essais de routine, le technicien des matériaux plastiques, et en particulier des caoutchoucs, est à même de formuler, c'est-à-dire retenir différents composants et les combiner selon différentes proportions, pour aboutir dans la fourchette de températures précitées à chacune des propriétés identifiées précédemment.

Par "pelage" de la garniture, on entend tout délaminage de la garniture, laissant subsister du matériau visco-élastique, d'un côté sur le support, et de l'autre côté sur la lame métallique.

A titre d'exemple non limitatif, un matériau visco-élastique tel que retenu par la présente invention comprend majoritairement en poids, et hors charge, du polyisobutylène. C'est ainsi qu'un matériau selon l'invention peut comprendre en pourcentage pondéral :
- de 5 à 25 % de polyisobutylène,
- de 2 à 15 % de caoutchouc butyle,
- de 2 à 12 % de résine tackifiante,
- et de 30 à 85 % d'une charge,
le solde de la composition pondérale consistant en au moins l'un quelconque des composés suivants, à savoir un agent antioxydant, un pigment et un adjuvant.

Par "résine tackifiante", on entend tout composant ou adjuvant conférant un pouvoir adhésif au matériau visco-élastique, ou augmentant son pouvoir adhésif.

Une garniture selon la présente invention apporte en outre les avantages déterminants suivants :
- une très grande souplesse, même à température relativement basse, contrairement aux garnitures traditionnelles qui deviennent cassantes dès 5°C; ceci permet d'épouser étroitement toutes sortes de formes de structures à traiter avec une garniture de l'invention
- un pouvoir adhésif important, en dehors de toute couche de liaison, quelle que soit sa température de mise en oeuvre ou utilisation
- une compatibilité excellente vis-à-vis des bains de traitement de surface et des peintures, puisqu'elle est pratiquement inerte chimiquement, et qu'elle n'est pas susceptible de polluer un bain de traitement de surface ou de peinture.

Au surplus, le matériau visco-élastique selon l'invention peut être formulé pour préserver son intégrité physico-chimique jusqu'à au moins 220°C. Ceci permet une utilisation de la garniture dans un environnement à haute température, tel que celui d'un four de cuisson d'une peinture. Ceci permet en particulier de mettre en place la garniture selon l'invention, dès le début de tout processus de fabrication, par exemple dès le montage d'un matériel à insonoriser, comprenant ensuite une étape à haute température, sans se préoccuper de ladite garniture, laquelle préservera ses propriétés et fonctions à l'issue du processus de fabrication, c'est-à-dire une fois le produit ou matériel terminé.

Un avantage important de la garniture selon l'invention est que, dans la phase de récupération de la structure la portant, les composants organiques de la garniture sont pyrolysés vers 450°C, sans générer de pollution, et permettent un recyclage des produits métalliques entrant dans sa composition.

La présente invention comporte encore les modes d'exécution suivants.

La couche plastique est recouverte, sur sa face à l'opposé de la feuille métallique, par une couche de liaison souple, susceptible d'épouser la forme extérieure de la structure à traiter, mais rigidifiable après fixation de la garniture, et comprenant une résine thermoplastique ou thermo-durcissable avec une armature déformable.

A titre d'exemple, la résine de la couche de liaison est une résine époxy, polyester, ou toute autre résine susceptible de se polymériser par exemple.

La couche de liaison est souple au moment de sa mise en oeuvre, c'est-à-dire de la pose de la garniture, afin de pouvoir épouser les formes de la structure à traiter. Puis, après fixation de la garniture, elle est rigidifiée ou durcie, par exemple par action de la chaleur, action ionisante ou par rayonnement ultra-violet, notamment pour polymériser la résine thermodurcissable de la couche de liaison.

Cette couche de liaison, appartenant à la garniture selon l'invention, permet un contact intime de cette dernière avec la structure traitée, tout en renforçant les propriétés et résistances mécaniques de ladite structure.

Selon un autre mode d'exécution de l'invention, la feuille métallique, par exemple en aluminium, est recouverte, sur sa face à l'opposé de la couche plastique, par une couche d'absorption sonore ayant une structure alvéolaire, soit au moment de la fixation de la garniture sur la structure traitée, soit pouvant être obtenue postérieurement à cette fixation.

A titre d'exemple, la couche d'absorption est constituée par un caoutchouc synthétique comportant des agents gonflants et réticulants, susceptibles d'expanser cette couche d'absorption par action de la chaleur, ou d'un rayonnement. La phase d'expansion, avec réticulation du matériau de la couche d'absorption, peut être effectuée, lors d'une phase choisie du cycle de fabrication de la structure à protéger.

La couche d'absorption sonore comprend, à titre d'exemple, majoritairement en poids, et hors charge, un caoutchouc halogéné, et notamment chloré. Ainsi, la couche d'absorption sonore peut comprendre en pourcentage pondéral de 15 à 28 % d'un caoutchouc chloré, de 10 à 25 % de polyisobutylène, de 5 à 15 % d'une résine tackifiante, et de 20 à 40 % d'une charge, le solde de la composition pondérale consistant en au moins l'un quelconque des composés suivants, à savoir un agent réticulant, et un agent gonflant.

Les deux formes d'exécution de l'invention, précédemment décrites peuvent être combinées, pour obtenir une garniture comprenant, d'un côté une couche d'absorption sonore sur la feuille métallique, et de l'autre côté une couche de liaison sur la couche plastique. Une telle garniture assure à la fois l'amortissement des vibrations, la rigidification et l'insonorisation de la structure traitée.

D'autres caractéristiques et avantages ressortiront de la description qui suit en référence au dessin schématique annexé, représentant à titre d'exemples non limitatifs, quelques formes d'exécution de la garniture selon l'invention.

Figures 1 à 3 sont des vues partielles en coupe transversale montrant trois formes d'exécution de la garniture selon l'invention au moment de la mise en place de celle-ci sur la paroi d'une structure,
Figure 4 est une vue partielle en coupe transversale montrant la garniture de figure 3 après expansion de la couche d'absorption sonore,
Figure 5 est une vue partielle en coupe transversale montrant une forme d'exécution de la garniture assurant les fonctions d'amortissement, de rigidification et d'insonorisation.
Figure 6 illustre les performances intrinsèques d'un matériau visco-élastique selon l'invention, pour des températures comprises entre -40°C et +70°C ; en abscisses sont portées les fréquences réduites de sollicitation du matériau, en Hz, et selon une échelle logarithmique, et en ordonnées le pouvoir amortissant exprimé en N/m², également selon une échelle logarithmique ; l'échantillon testé a une hauteur de 11 mm et un diamètre de 1 mm.

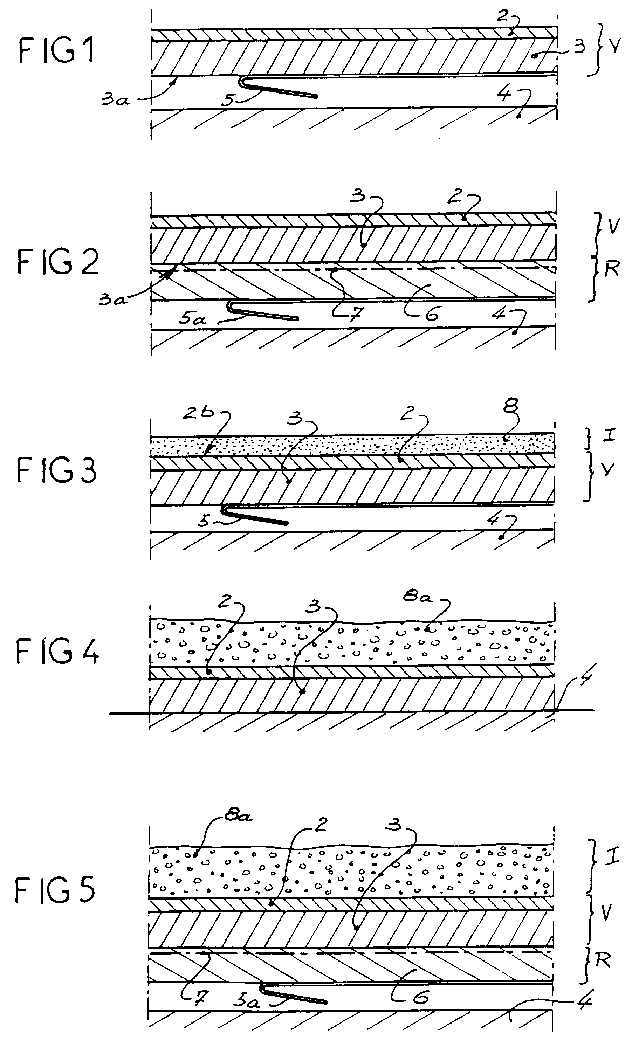

Dans la forme d'exécution représentée à la figure 1, la garniture est destinée à n'assurer qu'une fonction d'amortissement antivibratoire. Elle est composée d'une feuille métallique 2, c'est-à-dire en un matériau ayant un fort module de Young, dont l'épaisseur n'excède pas 5/10 mm, et d'une couche plastique 3 d'un matériau visco-élastique et intrinsèquement adhésif, par exemple d'un caoutchouc synthétique, réticulé ou non.

La feuille métallique 2, en acier, aluminium ou autre, est choisie en fonction des conditions d'amortissement, de l'environnement ou du support ou structure à traiter 4, sur lequel la garniture doit être fixée. La feuille 2 peut avoir une épaisseur allant de quelques micromètres à cinq dixièmes de millimètres.

La couche plastique 3 a une épaisseur qui varie, selon les caractéristiques recherchées, et qui peut aller de quelques dixièmes de millimètres à dix ou vingt millimètres. Elle se caractérise par un faible module de Young, un fort caractère adhésif, et un intervalle des températures de transition vitreuse autour de la température ambiante dans laquelle évolue la structure devant recevoir la garniture et, par exemple, aux environs de 60°C. Cette couche plastique 3 comprend un matériau visco-élastique, ayant la consistance d'un mastic, et présentant les différentes propriétés énoncées dans le préambule de la présente description. Ce mastic est par exemple à base de caoutchouc synthétique, de type caoutchouc butyle, polyisobutylène, polychloroprène, EPDM, nitrile ou autres produits équivalents, bien connus de l'homme de métier.

A titre d'exemple, une formulation de ce mastic comprend :
- caoutchouc butyle : 2 à 15 %
- polyisobutylène : 5 à 25 %
- résine tackifiante : 2 à 12 %
- charge : 30 à 85 %
- agent anti-oxydant : 0,5 à 3 %
- pigment : 0,5 à 5 %
- adjuvant : 0,5 à 5 %.

La charge est du talc, du carbonate de calcium ou tout autre produit connu de l'homme de métier.

On indique ci-après trois exemples supplémentaires d'un matériau visco-élastique selon l'invention, avec son pouvoir amortissant.

Formule N° 1 - Pouvoir amortissant en dB/sec: 68
- caoutchouc butyle : 7,60
- polyisobutylène : 15,4
- craie : 59
- résine pétrolière C5 5,5
- carbonate de calcium précipité : 1
- kaolin : 8,5
- adjuvants divers : 2,5
- teinte : 0,5

Formule N° 2 -Pouvoir amortissant en dB/sec: 100,5
- caoutchouc butyle : 15
- polyisobutylène : 24,5
- craie : 23,5
- résine pétrolière C5 : 8,5
- silice broyée : 14,5
- talc : 11
- adjuvants divers : 2,5
- teinte : 0,5

Formule N° 3 - Pouvoir amortissant en dB/sec: 70
- caoutchouc butyle : 5,0
- polyisobutylène : 20
- craie : 44,5
- résine pétrolière C5 : 3,5
- carbonate de calcium précipité : 14,8
- talc : 8
- adjuvants divers : 2,5
- teinte : 1,7

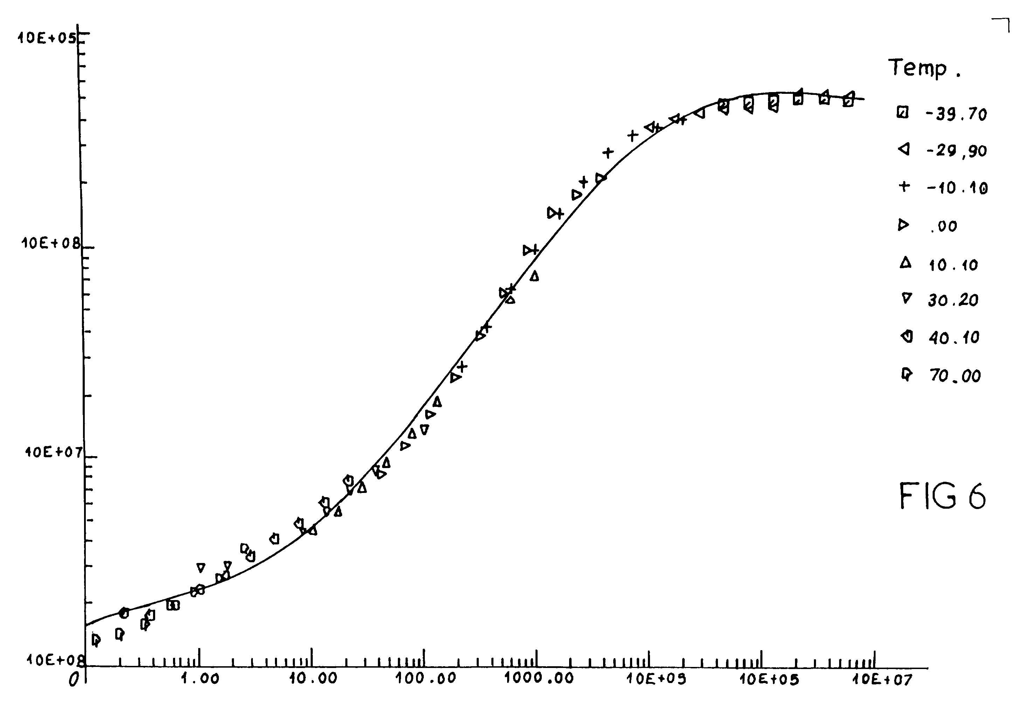

Les matériaux visco-élastiques selon l'invention présentent de manière générale les caractéristiques d'amortissement montrées à la figure 6, qui montre leur sensibilité relativement faible à la température.

Comme indiqué dans le préambule, le mastic 3 peut présenter un pouvoir adhésif important sur une plage de température de allant de -40°C à 220°C, ce qui rend inutile le recours à tout autre moyen adhésif pour assurer sa fixation, d'une part, sur la feuille métallique 2, d'autre part, sur le support 4.

La figure 1 montre que, pour faciliter le stockage de la garniture, sa face 3a, qui sera utilisée pour le collage de la garniture sur le support 4, est recouverte par une pellicule amovible 5, en matériau anti-adhérent, tel que siliconé ou autre.

Cette garniture est fournie en bobines ou rouleaux de bandes, découpables à la longueur, ou sous forme de pièces découpées à la forme particulière du support sur lequel elle doit être fixée. Sa mise en place s'effectue très aisément par retrait de la pellicule protectrice 5 et plaquage de la garniture sur la face du support 4, c'est à dire sur la face de la tôle de carrosserie, carcasse ou structure devant être traitée.

Des essais de traction au pelage de la garniture, ainsi mise en place sur un support, effectués à une vitesse de 200 millimètres/minute, indiquent une force de pelage d'environ 10 newtons/dm². En traction cisaillement, la force de rupture ou de laminage de la garniture est d'environ 4 décanewtons/dm².

Des mesures d'amortissement antivibratoire effectuées à l'aide d'un analyseur acoustique architectural Brüel et Kjaer 3550, suivant une méthode normalisée dite D451375, à la fréquence de 128,5 hertz, donnent les résultats apparaissant dans le tableau qui suit.

Ce tableau montre le très bon pouvoir amortissant du complexe constitué par la garniture selon l'invention.

| CARACTERISTIQUE | RESULTATS | | |
|---|---|---|---|
| Epaisseur en mm | 0,8 | 1,6 | 2,3 |
| Masse au m² en kg | 1,6 | 3 | 4 |
| Pouvoir amortissant des vibrations en db/s | | | |
| à 23°C | 61 | 113 | 124 |
| à 40°C | | | 104 |
| à 60°C | | | 78 |

Indépendamment de ces caractéristiques propres à la fonction amortissement antivibratoire, il faut noter que la garniture composite précédemment définie possède une excellente résistance aux acides et bases dilués et que la nature de ses composants ne procure aucune pollution des bains de traitement, ni des bains de peinture cataphorétiques, ce qui permet de la mettre en place sur les structures avant ces traitements, ou avant toute opération de peinture.

De plus, la feuille métallique 2 protège efficacement le mastic 3 contre les solvants qui pourraient être projetés pendant les opérations de construction de la structure.

La garniture présente une bonne résistance au vieillissement, au brouillard salin, et une excellente résistance aux températures. Aux basses températures, et grâce à sa base de caoutchouc butyle et de polyisobutylène, le mastic reste souple et non cassant, même aux températures extrêmes. Par ailleurs, son pouvoir adhésif n'est pas affecté par la température.

Cette garniture d'amortissement des vibrations peut être appliquée sur tout support ayant une température supérieure à 0°C. En effet, pour des températures inférieures, il est nécessaire de s'assurer que le support soit exempt de glace ou de givre pouvant affecter la liaison par adhérence. Au-delà de 35°C, l'adhérence immédiate rend difficile un repositionnement en cas de mauvais positionnement.

Pour améliorer le contact entre le mastic et le support, l'application de la garniture sur le support peut être suivie d'un marouflage, effectué à l'aide d'un rouleau ou d'une spatule.

La garniture ne contient ni bitume, ni solvant, ni produit dangereux. Elle ne nécessite aucune précaution d'emploi et de stockage et n'est pas assujettie à la réglementation sur les matières dangereuses.

En fin d'utilisation, son mastic peut être incinéré sans mesure particulière à une température de l'ordre de 400°C, ce qui entraîne des dégagements de gaz carbonique et de vapeur d'eau, c'est à dire des émanations non polluantes. Cette incinération désolidarise la feuille métallique 2 de la garniture et du support et permet ainsi de récupérer indépendamment les deux composants.

Dans la forme d'exécution représentée à la figure 2, la garniture à fonction d'amortissement vibratoire désignée par la référence générale V est combinée à une couche de liaison désignée par la référence générale R assurant la rigidification du support 4 sur lequel la garniture est fixée. Cette couche, qui est appliquée contre la face inférieure 3a de la garniture, est composée d'un substrat 6, à base de résine époxyde ou de résine polyester, déposé sur une armature 7, tel qu'un mat de verre, une feuille non tissée, un support métallique ou composite. Au moment de leur application, l'armature 7 et le substrat 6 sont souples et déformables, de manière à pouvoir épouser parfaitement les variations de forme et l'état de surface de la face 4a contre laquelle ils vont être disposés, après enlèvement d'une pellicule de protection 5a.

Immédiatement après dépôt ou, au contraire, bien après ce dépôt, et par exemple, lors d'une phase de traitement du support sur lequel ils sont déposés, et par exemple lors du passage d'une carrosserie dans un four-tunnel après trempage de cette carrosserie dans des bains de traitement ou un bain de peinture, le substrat 6 est soumis à un durcissement qui assure la rigidification du support 4 sur lequel il est disposé, sans pour autant affecter les facultés d'amortissement vibratoire de l'autre partie de la garniture.

Il est évident que la polymérisation par la chaleur peut être remplacée par une action ionisante, par une réaction chimique, ou par un rayonnement ultra violet, en fonction des caractéristiques du substrat utilisé, des conditions de fabrication de la structure, et du moment de l'application de la garniture sur cette structure.

Il est à noter que l'incorporation d'une couche de liaison dans la garniture forme un ensemble ayant une densité de l'ordre de 1,5, permettant, pour un surpoids réduit, de réduire considérablement l'épaisseur et le poids du support et notamment de la tôle, lorsqu'il s'agit d'un élément de carrosserie, tout en améliorant la rigidité et en supprimant les vibrations de cette structure.

Dans la forme d'exécution représentée à la figure 3, la garniture amortisseuse V est associée à une couche d'absorption sonore désignée par la référence I et composée, elle-même, par une matrice 8 à base de caoutchouc synthétique non réticulé. La couche I est disposée contre la face 2b de la feuille métallique 2 de la garniture, c'est à dire contre la face qui est tournée à l'opposé de la face 4a du support devant recevoir cette garniture.

A titre d'exemple, la formulation de la matrice 8 comprend :
- caoutchouc chloré : 15 à 28 %
- polyisobutylène : 10 à 25 %
- charge minérale : 20 à 40 %
- résine tackifiante : 5 à 15 %
- agent réticulant : 1 à 5 %
- agent gonflant : 1 à 6 %.

Cette formule est ajustée en fonction de la qualité de la mousse d'absorption sonore recherchée, à savoir souple ou semi rigide, du taux de gonflement souhaité, ainsi que de la vitesse d'expansion requise.

Grâce à son fort pouvoir adhérent, la matrice 8 est appliquée, sans aucun autre élément adhésif, directement sur la face 2b de la feuille 2 et cela quelle que soit la nature du matériau métallique constituant cette feuille.

La figure 3 montre que la couche d'absorption sonore I fait corps avec la garniture V qui, comme décrit précédemment, peut être fournie sous forme de rouleaux ou de bobines, ou sous forme de plaques prédécoupées, dont la face adhérente 3a est protégée par une pellicule 5. Grâce à cette structure dont l'épaisseur varie en rapport avec les fonctions d'amortissement et d'insonorisation recherchées, la garniture peut être mise en place très tôt dans le processus de fabrication de la structure traitée, au plus près des sources d'émission sonore, mais aussi dans des zones qui, en cours de fabrication, pourront être totalement obturées, par exemple par la mise en place de panneaux ou d'autres éléments de la structure de carrosserie, de carcasse, etc.

Après cette mise en place de la garniture, il peut être procédé immédiatement à l'expansion de la matrice 8. Toutefois, selon un avantage particulier propre à l'invention, cette expansion peut être réalisée plus tard, lors du processus de fabrication de la carrosserie, de la carcasse, ou de la structure, soit par élévation locale de la température, soit par rayonnement, ionisant ou ultra violet.

Après expansion, la garniture présente la forme représentée à la figure 4 et comporte, en direction de la source d'émission sonore, une mousse d'absorption sonore 8a qui assure une excellente insonorisation.

Il faut ici noter que, lorsque la garniture selon l'invention est disposée sur un élément de carrosserie, lors d'un cycle disposé en amont du cycle de peinture par trempage de cette carrosserie, le trempage n'altère en rien les caractéristiques d'insonorisation, puisqu'il est suivi d'une phase de séchage par passage dans un tunnel ou la chaleur, ou des lampes à ultra violet, provoquent le séchage de la peinture, mais aussi l'expansion et la réticulation de la matrice 8. Cette expansion de la matrice fragmente et écaille la couche de peinture précédemment déposée sur couche I et, progressivement élimine ces écailles de peinture pour libérer totalement la mousse obtenue.

La forme d'exécution représentée à la figure 5 se différencie des précédentes par le fait que la garniture selon l'invention comprend, en combinaison, la structure V assurant la fonction d'amortissement des vibrations, la couche de liaison R assurant la rigidification du support sur lequel elle est déposée, et enfin la couche d'absorption sonore I assurant l'insonorisation. Cette dernière couche peut être expansée avant ou après application de la garniture sur le support 4.

Cette garniture multifonctionnelle, qui est peu onéreuse à réaliser puisque obtenue par extrusion et/enduction sur la feuille métallique 2, est très facile à mettre en oeuvre, a une masse spécifique comprise entre 1 et 2 c'est à dire bien inférieure à la masse spécifique des métaux courants, a une épaisseur réduite par rapport aux garnitures actuelles n'assurant qu'une fonction, et permet, par une mise en oeuvre simple, d'améliorer considérablement les qualités de la structure qu'elle traite, et parallèlement de réduire l'épaisseur des tôles utilisées pour réaliser cette structure.

Avec un protocole expérimental approprié, les caractéristiques ou propriétés complémentaires suivantes d'une garniture selon l'invention ont été mises en évidence :
1) le pouvoir amortissant est d'autant plus important que la différence entre l'élasticité (module de Young) du matériau visco-élastique et celle de la feuille métallique est importante
2) le pouvoir amortissant est d'autant plus important que le pouvoir adhésif du matériau visco-élastique, ou l'adhérence de la garniture sur la structure traitée est importante
3) l'épaisseur de la couche plastique doit être au moins de 0,8 mm ; en dessous de cette épaisseur minimum, les performances d'amortissement de la garniture chutent de manière importante.

Une garniture selon l'invention présente aussi l'avantage de pouvoir être ouvrée, travaillée, découpée comme n'importe quel matériau traditionnel en feuille, par conséquent avec des matériels ou équipements usuels. S'agissant du découpage, il est possible en particulier de découper des pièces de dimensions appropriées, par exemple des pastilles, pour les fixer à des endroits précis de la structure traitée, par exemple aux noeuds de vibration.

Il faut enfin noter que l'association à la garniture V représentée à la figure 1 ayant une fonction d'amortissement des vibrations, des couches R et I représentées aux figures 2 et 3 ayant, respectivement, une fonction de rigidification et une fonction d'insonorisation, améliore les caractéristiques d'amortissement des vibrations et constitue, grâce à la synergie des couches en présence, une combinaison originale.

## Revendications

1. Garniture composite d'amortissement sonore, destinée à être fixée sur une structure à traiter émettant ou transmettant des sons, par exemple une carrosserie d'automobile, comprenant une plaque (2) en matériau rigide, dont la face destinée à venir contre la structure à traiter est recouverte et liée à une couche (3) d'un matériau plastique, ayant la consistance d'un mastic, et formulé pour conserver l'essentiel de son intégrité physico-chimique dans un intervalle de températures de environ - 40°C à environ + 60°C, **caractérisée en ce que,** d'une part la plaque rigide (2) consiste en au moins une feuille métallique souple dont l'épaisseur est au plus égale à 5/10 de mm, et inférieure à l'épaisseur de la couche plastique (3) du matériau plastique, et d'autre part ce dernier est en outre formulé pour présenter et combiner les propriétés suivantes, dans l'intervalle de températures précité :
- conserver pour l'essentiel sa visco-élasticité,
- présenter, dans son état lié à la feuille métallique (2), un pouvoir d'amortissement sonore, en db/s, au m² et pour 1kg de garniture, au moins égal à 10, et de préférence au moins égal à 60,
- et présenter, dans son état lié à la feuille métallique (2), un pouvoir adhésif, exprimé par la force de traction nécessaire au pelage de la garniture, au moins égal à 40 N/dm².

2. Garniture selon la revendication 1, **caractérisée en ce que** le matériau visco-élastique est formulé pour également préserver son intégrité physico-chimique jusqu'à au moins 220°C.

3. Garniture selon la revendication 1, **caractérisée en ce que** le matériau visco-élastique est formulé pour être inerte vis-à-vis de tout bain, notamment de peinture, dans lequel il est susceptible d^{r}être immergé.

4. Garniture selon la revendication 1, **caractérisée en ce que** le matériau visco-élastique comprend majoritairement en poids, et hors charge, du polyisobutylène.

5. Garniture selon la revendication 4, **caractérisée en ce que** le matériau visco-élastique comprend en % pondéral, de 5 à 25 % de polyisobutylène, de 2 à 15 % de caoutchouc butyle, de 2 à 12 % d'une résine tackifiante, et de 30 à 85 % d'une charge, le solde de la composition pondérale consistant en au moins l'un quelconque des composés suivants, à savoir un agent antioxydant, un pigment, et un adjuvant.

6. Garniture selon la revendication 1, **caractérisée en ce que** la couche de plastique (3) est recouverte, sur sa face (3a) à l'opposé de la feuille métallique (2), par une couche de liaison (7) souple, susceptible d'épouser la structure à traiter, mais rigidifiable après fixation de ladite garniture, et comprenant une résine thermoplastique ou thermodurcissable et une armature déformable.

7. Garniture selon la revendication 1, **caractérisée en ce que** la feuille métallique (2) est recouverte, sur sa face (2b) à l'opposé de la couche plastique (3), par une couche d'absorption sonore (8) ayant une structure alvéolaire, au moment de la fixation de ladite garniture sur la structure traitée, ou pouvant être obtenue postérieurement à cette fixation.

8. Garniture selon les revendications 6 et 7, **caractérisée en ce qu'**elle comprend d'un côté une couche d'absorption sonore (8) sur la feuille métallique, et de l'autre côté, une couche de liaison (7) sur la couche plastique (3).

9. Garniture selon la revendication 7, **caractérisée en ce que** la couche d'absorption sonore comprend majoritairement en poids, et hors charge, un caoutchouc halogéné.

10. Garniture selon la revendication 9, **caractérisée en ce que** la couche d'absorption sonore comprend en % pondéral, de 15 à 28 % de caoutchouc halogéné, de 10 à 25 % de polyisobutylène, de 5 à 15 % de résine tackifiante, et de 20 à 40 % d'une charge, le solde de la composition pondérale consistant en au moins l'un quelconque des composés suivants, à savoir un agent réticulant, et un agent gonflant.

## Patentansprüche

1. Schalldämpfende Verbundauskleidung, die dazu vorgesehen ist, um an einer zu behandelnden, schallaussendenden oder schallübertragenden Struktur, beispielsweise einer Fahrzeugkarosserie, befestigt zu werden, mit einer Platte (2) aus steifem Material, bei der diejenige Seite, die an der zu behandelnden Struktur anliegen soll, mit einer Schicht (3) an einem Kunststoffmaterial bedeckt und mit diesem verbunden ist, welches die Konsistenz von Mastix hat, und das so formuliert ist, daß es in einem Temperaturbereich zwischen etwa - 40°C bis etwa + 60°C seine physikalisch-chemische Beschaffenheit im wesentlichen beibehält, dadurch gekennzeichnet, daß einerseits die steife Platte (2) aus zumindest einem flexiblen Metallblech besteht, dessen Dicke höchstens 5/10 mm beträgt und die geringer als die Dicke der Kunststoffschicht (3) aus Kunststoffmaterial ist, und daß andererseits letzteres so formuliert ist, daß es im vorgenannten Temperaturbereich die folgenden Eigenschaften aufweist und in sich vereinigt, nämlich
- daß es im wesentlichen seine Viskoelastizität beibehält,
- daß es im mit dem Metallblech (2) verbundenen Zustand, pro m² und pro kg Auskleidung ein Schalldämpfungsvermögen, ausgedrückt in dB/s, von zumindest gleich 10 und vorzugsweise von zumindest gleich 60 aufweist, und
- daß es im mit dem Metallblech (2) verbundenen Zustand eine Bindekraft, ausgedrückt durch die Zugkraft, die notwendig ist, um die Auskleidung abzuziehen, von zumindest gleich 40 N/dm² aufweist.

2. Auskleidung nach Anspruch 1, dadurch gekennzeichnet, daß das viskoelastische Material so formuliert ist, daß es seine physikalisch-chemische Beschaffenheit bis zumindest 220°C gleichermaßen beibehält.

3. Auskleidung nach Anspruch 1, dadurch gekennzeichnet, daß das viskoelastische Material so formuliert ist, daß es gegenüber jeglicher Badflüssigkeit, insbesondere Farben, in die dieses eintauchbar ist, inert ist.

4. Auskleidung nach Anspruch 1, dadurch gekennzeichnet, daß das viskoelastische Material als Hauptgewichtsanteil, und zwar außer dem Füllstoff, Polyisobutylen enthält.

5. Auskleidung nach Anspruch 4, dadurch gekennzeichnet, daß das viskoelastische Material 5 bis 25 Gew.-% Polyisobutylen, 2 bis 15 Gew.-% Butylkautschuk, 2 bis 12 Gew.-% eines klebrigmachenden Harzes und 30 bis 85 Gew.-% eines Füllstoffs aufweist, wobei der restliche Gewichtsanteil der Zusammensetzung aus zumindest einer der folgenden Verbindungen besteht, nämlich einem antioxidierenden Agens, einem Pigment und einem Zusatzstoff.

6. Auskleidung nach Anspruch 1, dadurch gekennzeichnet, daß die Kunststoffschicht (3) auf ihrer dem Metallblech (2) gegenüberliegenden Seite (3a) mit einer elastischen Verbindungsschicht (7) beschichtet ist, die sich der zu behandelnden Struktur anschmiegen kann, jedoch nach Befestigen der Auskleidung aushärtbar ist, und die einen thermoplastischen oder einen durch Wärme aushärtbaren Kunststoff und eine verformbare Verstärkung aufweist.

7. Auskleidung nach Anspruch 1, dadurch gekennzeichnet, daß das Metallblech (2) auf seiner der Kunststoffschicht (3) gegenüberliegenden Seite (2b) von einer eine zellige Struktur aufweisenden schallabsorptionsschicht (8) bedeckt ist, und zwar zum Zeitpunkt des Befestigens der Auskleidung an der zu behandelnden Struktur, oder diese kann auch nach dem Befestigen erhalten werden.

8. Auskleidung nach den Ansprüchen 6 und 7, dadurch gekennzeichnet, daß sie einerseits auf dem Metallblech eine Schallabsorptionsschicht (8) und andererseits auf der Kunststoffschicht (3) eine Verbindungsschicht (7) aufweist.

9. Auskleidung nach Anspruch 7, dadurch gekennzeichnet, daß die Schallabsorptionsschicht in einem überwiegenden Gewichtsanteil, und zwar außer einem Füllstoff, einen halogenierten Kautschuk enthält.

10. Auskleidung nach Anspruch 9, dadurch gekennzeichnet, daß die Schallabsorptionsschicht 15 bis 28 Gew.-% halogenierten Kautschuk, 10 bis 25 Gew.-% Polyisobutylen, 5 bis 15 Gew.-% eines klebrigmachenden Harzes und 20 bis 40 Gew.-% eines Füllstoffs aufweist, wobei der restliche Gewichtsanteil der Zusammensetzung aus zumindest einer der folgenden Verbindungen besteht, nämlich einem vernetzenden Mittel, und einem Schäummittel.

## Claims

1. Composite sound damping member, intended to be fixed to a structure to be treated, emitting or transmitting sounds, for example the bodywork of a motor vehicle, comprising a plate (2) of rigid material, of which the face intended to be against the structure to be treated is covered (by) and bonded to a layer (3) of a plastic material, having the consistency of a mastic, and formulated essentially to retain its physico-chemical integrity within a temperature range of from approximately - 40°C to approximately + 60°C, characterised in that, on the one hand the rigid plate (2) consists of at least one flexible metallic sheet, the thickness of which is at most 5/10 mm, and less than the thickness of the plastic layer (3) of the plastic material, and on the other hand the latter is moreover formulated so as to exhibit and combine the following properties, within the above-mentioned temperature range :
- essentially to retain its visco-elasticity,
- to exhibit, in its state bonded to the metallic sheet (2), a sound damping power, in dB/s, per m² and per 1kg of member, of at least 10, and preferably of at least 60,
- and to exhibit, in its state bonded to the metallic sheet (2), an adhesive power, expressed by the tensile force required for peeling of the member, of at least 40 N/dm².

2. Member according to Claim 1, characterised in that the visco-elastic material is formulated also to retain its physico-chemical integrity up to at least 220°C.

3. Member according to Claim 1, characterised in that the visco-elastic material is formulated so as to be inert with respect to any bath, especially paint bath, in which it is likely to be immersed.

4. Member according to Claim 1, characterised in that the visco-elastic material predominantly comprises by weight, and apart from filler, polyisobutylene.

5. Member according to Claim 4, characterised in that the visco-elastic material comprises, in % by weight, from 5 to 25% of polyisobutylene, from 2 to 15% of butyl rubber, from 2 to 12% of a tackifying resin, and from 30 to 85% of a filler, the balance of the composition by weight consisting of at least any one of the following compounds, namely, an antioxidant, a pigment and an additive.

6. Member according to Claim 1, characterised in that the plastic layer (3) is covered, on the opposite face (3a) from the metallic sheet (2), by a flexible bonding layer (7), capable of moulding to the structure to be treated, but able to be rigidified after fixing of the said member, and comprising a thermoplastic or thermosetting resin and a deformable reinforcement.

7. Member according to Claim 1, characterised in that the metallic sheet (2) is covered, on the opposite face (2b) from the plastic layer (3), by a sound absorption layer (8) having a cellular structure, at the moment of fixing of the said member to the structure treated, or being able to be obtained subsequent to fixing.

8. Member according to Claims 6 and 7, characterised in that it comprises on one side a sound absorption layer (8) on the metallic sheet, and on the other side a bonding layer (7) on the plastic layer (3).

9. Member according to Claim 7, characterised in that the sound absorption layer predominantly comprises by weight, and apart from filler, a halogenated rubber.

10. Member according to Claim 9, characterised in that the sound absorption layer comprises, in % by weight, from 15 to 28% of halogenated rubber, from 10 to 25% of polyisobutylene, from 5 to 15% of tackifying resin, and from 20 to 40% of a filler, the balance of the composition by weight consisting of at least any one of the following compounds, namely, a crosslinking agent, and a swelling agent.
